# DEMANDE DE BREVET EUROPEEN

(11) **EP 0 659 964 A1**
(43) Date de publication de la demande: **28.06.1995**
(21) Numéro de dépôt: 93403095.8
(22) Date de dépôt: 20.12.1993
(51) Int. Cl.: E05B 53/00, F16C 1/16

(54) **Dispositif de commande des déplacements d'un cable à l'aide d'au moins un levier**

(71) Demandeur: MECAPLAST SAM, MC-98000 Monaco (MC)
(72) Inventeur: Morando, Patrick, F-06000 Nice (FR)
(74) Mandataire: Debay, Yves

(57) **Abrégé**

La présente invention concerne un dispositif de commande des déplacements d'un câble (7) dans sa gaine à l'aide d'au moins un levier (4,5) permettant le déplacement du câble (7) entre trois positions différentes, avancée, intermédiaire, reculée, correspondant à trois fonctions à commander est caractérisé en ce que l'extrémité (70) du câble (7) est rendue solidaire d'un patin (1) coulissant dans une gorge à proximité d'au moins un levier (4,5), ledit patin (1) étant pourvu d'au moins deux dents (11,12,13,14,15) sur une face tournée vers le levier (4,5), et permettant, soit par une double traction sur le levier unique (4) de déplacer successivement le patin (1) entre les trois positions, soit par une traction successive sur chacun des deux leviers (4,5), le déplacement du patin (1) entre les trois position.

## Description

La présente invention concerne un dispositif de commande des déplacements d'un câble à l'aide d'au moins un levier pour permettre le déplacement du câble entre trois positions différentes.

Il est connu des dispositifs de ce type dans l'art antérieur, permettant, par deux leviers de modifier le déplacement du câble par rapport à sa gaine, un des leviers servant à pousser le câble dans la gaine, soit par modification de la position de l'extrémité de la gaine par rapport à l'extrémité du câble, soit par modification de l'extrémité du câble par rapport à l'extrémité de la gaine.

Dans les dispositifs de l'art antérieur, l'extrémité du câble est animée d'un mouvement pivotant et effectue un déplacement relatif par rapport au levier d'actionnement, c'est le cas par exemple du brevet EP 169 644.

Toutefois, ces dispositifs de l'art antérieur, d'une part sont mécaniquement complexes, et donc onéreux à réaliser, et, d'autre part provoquent un déplacement du câble en arc de cercle, ce qui, à la longue, porte préjudice au bon fonctionnement.

Un premier but de l'invention est donc de proposer un dispositif de commande des déplacements d'un câble dans sa gaine à l'aide d'au moins un levier pour permettre le déplacement du câble entre trois positions différentes qui soit à la fois simple à réaliser et à fabriquer et qui ne provoque pas de mouvements en arc de cercle pour le câble.

Ce but est atteint par le fait que le dispositif de commande des déplacements d'un câble dans sa gaine à l'aide d'au moins un levier permettant le déplacement du câble entre trois positions différentes, avancée, intermédiaire, reculée, correspondant à trois fonctions à commander est caractérisé en ce que l'extrémité du câble est rendue solidaire d'un patin coulissant dans une gorge à proximité d'au moins un levier, ledit patin étant pourvu d'au moins deux dents sur une face tournée vers le levier, et permettant, soit par une double traction sur le levier unique de déplacer successivement le patin entre les trois positions, soit par une traction successive sur chacun des deux leviers, le déplacement du patin entre les trois position.

Selon une première variante à deux leviers, le dispositif de commande des déplacements d'un câble dans sa gaine à l'aide de leviers permettant le déplacement du câble entre trois positions différentes, avancée, intermédiaire, reculée, correspondant à trois fonctions à commander est caractérisé en ce que l'extrémité du câble est rendue solidaire d'un patin coulissant dans une gorge à proximité des deux leviers, ledit patin étant pourvu d'au moins deux dents sur une face tournée vers les leviers, le premier levier comportant une fourche engrénant avec une première dent pour déplacer le patin de la position la plus avancée où le deuxième levier n'engrène pas avec la deuxième dent, à la position intermédiaire où une fourche du deuxième levier engrène avec la deuxième dent, pour assurer par actionnement du deuxième levier le déplacement du patin de la position intermédiaire à la position reculée.

Selon une autre particularité, la gorge est linéaire.

Selon une autre particularité, le premier levier comporte un épaulement venant en butée sur la première dent du patin lorsque celui-ci est dans la position reculée.

Selon une autre particularité, le deuxième levier comporte un épaulement assurant le retour du patin de la position reculée à la position intermédiaire lorsque le deuxième levier bascule de sa position d'ouverture à la position de repos.

Un autre but de l'invention est de proposer un dispositif selon le premier but qui permette par l'actionnement d'un seul levier le déplacement du patin d'une première position extrême à l'autre position extrême, ceci sans avoir à intervenir sur un autre levier.

Ce but est atteint par le fait que le patin comporte en vis-à-vis du levier deux dents dont l'une, de taille supérieure, permet par coopération avec le levier, sollicité en permanence vers une position de repos par un ressort, de déplacer le patin de la position avancée à la position reculée.

Selon une autre particularité, la dent de taille supérieure est disposée et conformée sur le patin de façon que le patin étant dans la position avancée, une dent du levier appuie sur la dent de taille supérieure et reste à son contact pendant tout le déplacement de la position avancée à la position reculée.

Selon une autre particularité, la dent du levier forme une fourche de profondeur et de largeur suffisantes pour enjamber les deux dents du patin.

Selon une autre particularité, les leviers sont montés pivotant dans une coquille comportant en son fond une gorge de guidage du patin.

Un autre but est de proposer une autre variante d'un dispositif de commande du câble à l'aide d'un seul levier entre trois positions.

Ce but est atteint par le fait que le levier sollicité en permanence vers une position de repos par un ressort comporte deux éléments d'engrènement décalés axialement par rapport à l'axe de pivotement du levier et angulairement de façon à engrener chacun avec un élément complémentaire disposé chacun sur le patin selon deux pistes parallèles à l'axe du câble, les premiers éléments d'engrènement assurant par une traction sur le levier le déplacement du patin d'une première position dite condamnée vers une deuxième position dite décondamnée dans laquelle les deuxièmes éléments d'engrènement du levier et du patin coopèrent, les deuxièmes éléments assurant, par une deuxième traction sur le levier, le déplacement du patin de la deuxième position vers une troisième position dite d'ouverture.

Selon une autre particularité, lorsque le levier est relâché, le ressort de rappel du levier, en ramenant celui-ci à la position de repos, assure également le déplacement du patin de la troisième position à la deuxième.

Selon une autre particularité, une pression exercée sur le levier lorsque le patin est dans la deuxième position, assure par le premier élément d'engrènement, le retour du patin à la première position.

Selon une autre particularité, le premier élément d'engrènement est constitué d'un pignon sur le levier et de deux dents disposées à chaque extrémité du patin.

Selon une autre particularité, le deuxième élément est constitué d'une languette élastique saillante formée dans le patin et d'une encoche formée dans la surface du levier pour qu'elle se trouve en vis-à-vis de la languette lorsque le patin est dans la deuxième position.

Selon une autre particularité, le premier élément est constitué d'une dent située approximativement au centre du patin et coopérant avec une encoche angulaire du levier correspondant à l'angle nécessaire au déplacement du patin.

Selon une autre particularité, la coquille comporte des moyens de clipsage avec un élément décoratif permettant le pincement de la surface sur laquelle est monté le dispositif entre la coquille et l'élément décoratif.

D'autres particularités et avantages de la présente invention apparaîtront plus clairement à la lecture de la description ci-après faite en référence aux dessins annexés dans lesquels :
- la figure 1 représente une vue en coupe transversale du dispositif selon l'invention ;
- les figures 2A à 2C représentent une vue en coupe partielle longitudinale du premier levier dans les différentes positions de fonctionnement selon l'invention;
- les figures 3A à 3C représentent une vue en coupe longitudinale du deuxième levier dans les différentes positions de fonctionnement ;
- la figure 4 représente une vue en perspective du patin selon une deuxième variante de l'invention ;
- la figure 5A représente une vue de détail des moyens de clipsage permettant le montage du dispositif sur une plaque support.
- les figures 5B et 5C représentent une vue en coupe longitudinale du deuxième levier en cours de fonctionnement ;
- les figures 6A à 6C représentent une vue en coupe du deuxième levier en coopération avec la troisième dent du patin lorsque le deuxième levier est actionné d'une position de repos à la position la plus extrême ;
- les figures 7A et 7B représentent en perspective une troisième variante de réalisation de l'invention fonctionnant avec un seul levier ;
- les figures 8A à 8C représentent les différentes positions relatives du levier et du patin selon les actions effectuées sur le levier selon la troisième variante ;
- la figure 9A représente une quatrième variante de réalisation du levier ;
- la figure 9B représente une vue de côté de la partie du levier agissant sur la languette élastique du patin représentée dans les différentes positions ;
- la figure 9C représente une vue de dessus d'une quatrième variante de réalisation du patin.

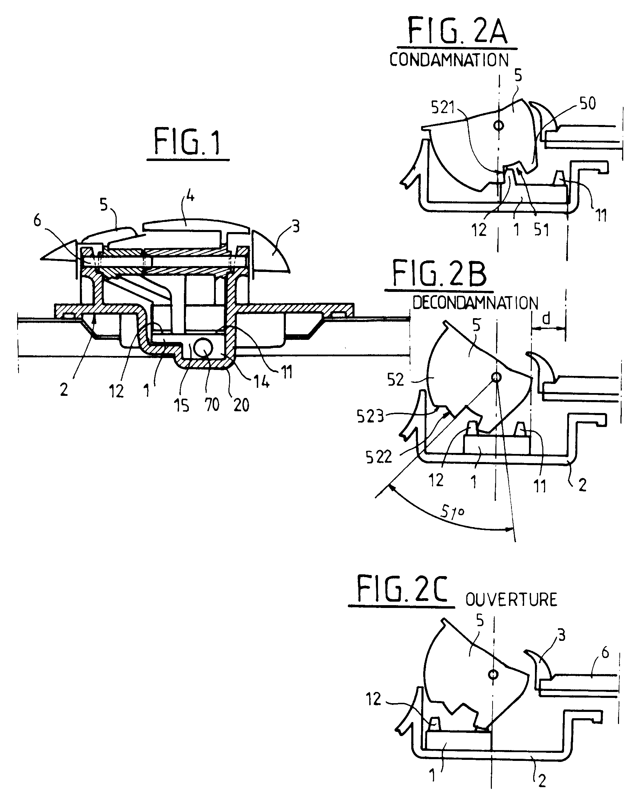

Une première variante de l'invention sera maintenant décrite à l'aide des figures 1 à 3.

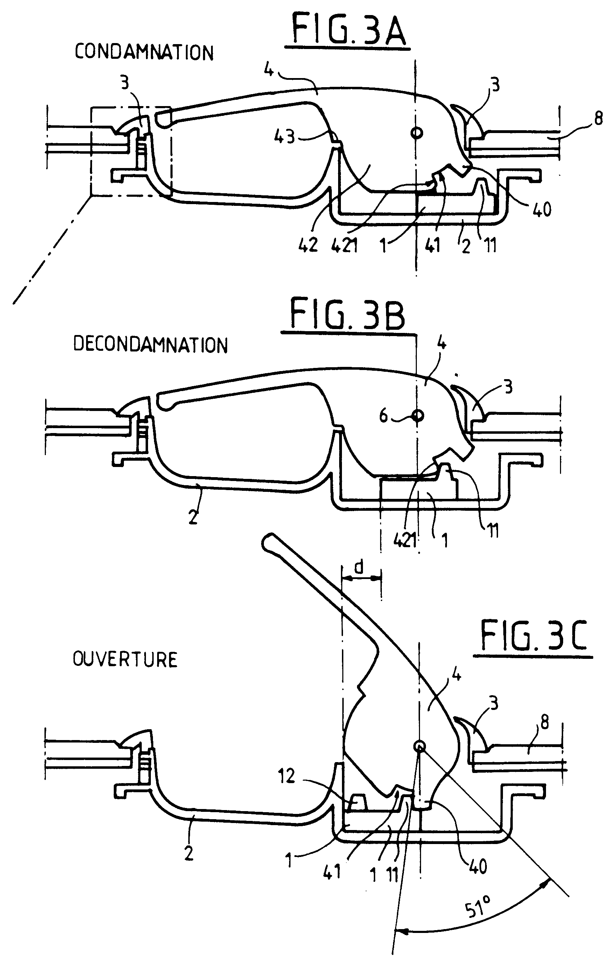

Dans cette variante, le dispositif de l'invention est constitué d'une coquille en matériau moulable formant en son fond (20) une rainure de guidage et de coulissement d'un patin (1) entre trois positions, une avancée correspondant à la position représentée aux figures 2A et 3A, l'autre intermédiaire correspondant à la position représentée aux figures 2B et 3B, et la dernière reculée correspondant à la position du patin représentée aux figures 2C et 3C.

Le patin (1) comporte, sur sa face tournée en direction de l'ouverture de la coquille (2), des leviers (4, 5) montés pivotants sur un axe (6) solidaire de la coquille (2), une première dent (12) située à l'avant du patin et une deuxième dent (11) située à l'arrière du patin et décalée latéralement par rapport à la première dent (12). Comme représenté à la figure 2A, la première dent (12) est entourée d'une fourche (51) formée sur le premier levier (5) monté pivotant sur l'axe (6) solidaire de la coquille (2). La fourche (51) comporte une dent (50) et un épaulement (521). L'épaulement (521) a pour objet de maintenir le patin dans la position avancée représentée à la figure 2A lorsque le levier (5) est basculé dans la position dite de condamnation de la figure 2A. Au cours du basculement du levier (5) de la position 1 de condamnation à la position 2 dite de décondamnation, la dent (50) prend appui sur la première dent (12) du patin (1) et provoque le coulissement du patin (1) dans son logement pour amener ce dernier de la position avancée de la figure 2A à la position intermédiaire représentée à la figure 2B. Dans cette position, le patin (1) a sa deuxième dent (11) qui se trouve à la verticale d'une fourche (41) formée sur un deuxième levier (4) monté pivotant sur l'axe fixe (6). Par actionnement du deuxième levier (4) en rotation, la dent (40) formant l'extrémité de la fourche vient en appui sur la deuxième dent (11) du patin (1) et provoque ainsi le coulissement de ce patin (1) de la position intermédiaire correspondant à la figure 3B à la position reculée correspondant à la position représentée à la figure 3C. Comme représenté à la figure 1, la deuxième dent (11) est décalée latéralement par rapport à la première dent (12), ce qui permet au patin de coulisser sans que cette deuxième dent (11) vienne en butée sur la dent avant (50) de la fourche (51) du premier levier (5).

Lorsque le patin (1) est en position reculée à la suite de l'actionnement du deuxième levier (4), comme représenté à la figure 3C, on remarque sur la figure 2C que le basculement du premier levier (5) est rendu impossible par un épaulement (523) du premier levier (5) qui viendrait, de ce fait, en butée contre la première dent (12) du patin. Ainsi, comme on peut le comprendre sur la figure 2A, le passage de la position avancée à la position intermédiaire est assuré par le premier levier (5) et fait effectuer au patin (1) un déplacement d'une valeur d pour amener ainsi la deuxième dent (11) en contact avec l'épaulement (421) de la fourche du deuxième levier (4) qui se trouve dans la position de repos représentée à la figure 3B. Le passage du deuxième levier (4) de la position de repos à la position d'ouverture par une rotation d'un angle de l'ordre de 51° provoque le déplacement du patin (1) par action de la dent (40) du deuxième levier (4) sur la deuxième dent (11) du patin (11) d'une distance d représentée aux figures 3B et 3C. Ainsi, si le patin (1) est rendu solidaire d'un câble (7) dont la tête d'extrémité (70) est montée dans un logement (15) prévu à cet effet dans le patin (1), le dispositif décrit ci-dessus va permettre d'engendrer deux déplacements du câble d'une valeur donnée, ces déplacements du câble étant susceptibles à l'autre extrémité de commander trois fonctions différentes, chacune étant associée à une des positions prises par la tête de câble.

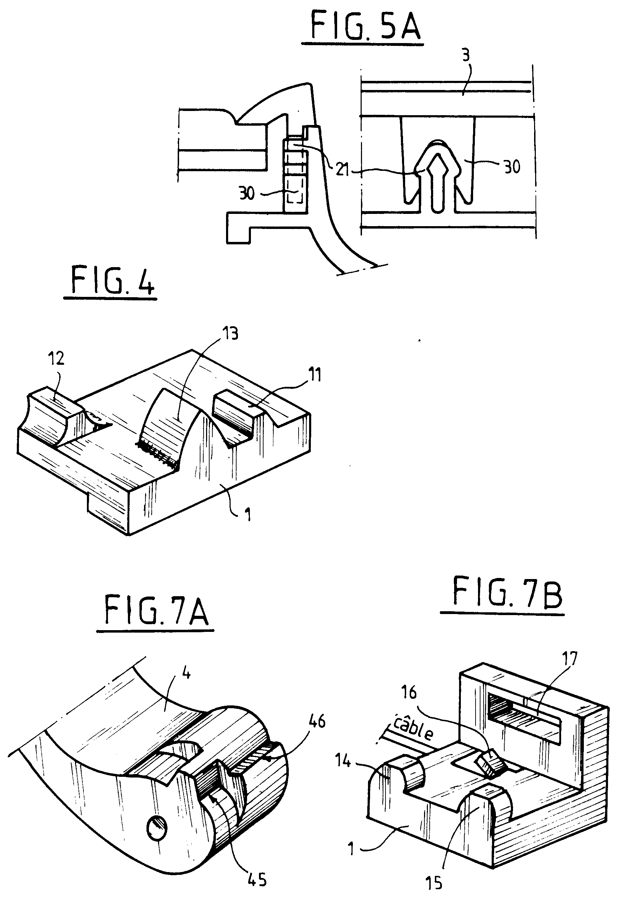

Les figures 4 à 6 représentent une deuxième variante de l'invention dans laquelle le patin (1) comporte une troisième dent (13) placée dans l'alignement de la deuxième dent (11) et décalée dans le sens longitudinal. Le deuxième levier (4) comporte également une modification qui consiste à agrandir la fourche (44) de façon à ce qu'elle puisse enjamber à la fois la deuxième et la troisième dent (11, 13) entre sa dent extrême (40) et l'épaulement (422).

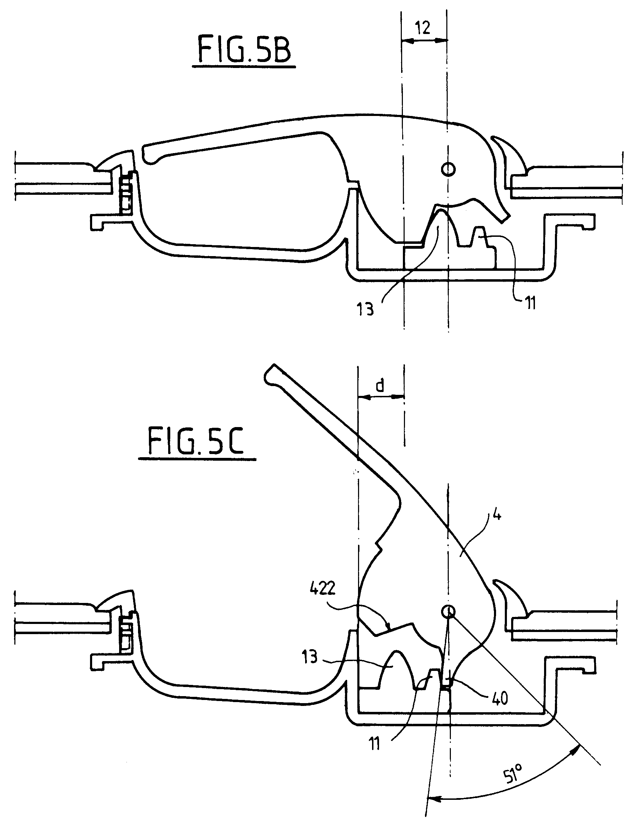

De cette façon, en fonctionnement normal, comme représenté aux figures 5, lorsque le patin a été, comme précédemment amené à la position intermédiaire correspondant à la position de la figure 5B, et que le levier (4) est actionné par l'utilisateur, la dent avant (40) du deuxième levier (4) prend appui sur la deuxième dent (11) du patin pour déplacer celui-ci de la position intermédiaire à la position reculée correspondant à celle représentée à la figure 5C.

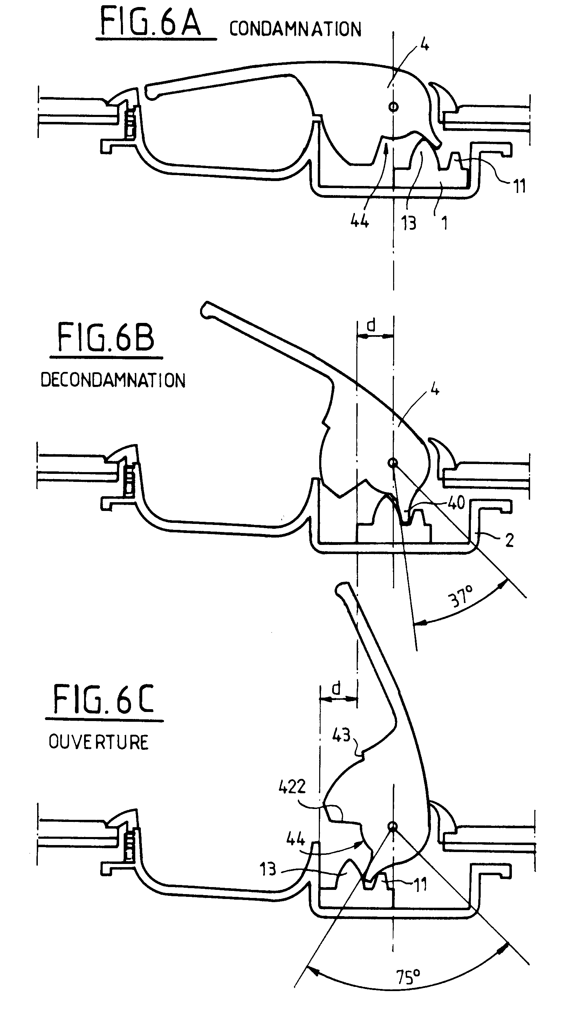

L'intérêt de la troisième dent (13) apparait sur les figures 6 dans lesquelles on peut voir que l'actionnement du deuxième levier (4) sur un angle d'amplitude plus grand peut permettre à l'utilisateur d'effectuer le déplacement du patin (1) de la position avancée jusqu'à la position reculée sans avoir à agir sur le premier levier (5). En effet, dans la position avancée, représentée à la figure 6A, la dent (40) du deuxième levier (4) est en appui sur la troisième dent (13) du patin (1). Par actionnement du levier (4), l'utilisateur fait effectuer un déplacement au patin (1) pour l'amener successivement en position intermédiaire par un déplacement angulaire de l'ordre de 37° du deuxième levier (4) et par un déplacement angulaire supplémentaire de l'ordre de 38° le levier (4) va pousser la dent (13) de façon à ce que le patin atteigne la position reculée.

Cette variante est particulièrement utile dans les utilisations d'un tel dispositif pour commander le fonctionnement d'un élément relié par un câble au patin qui est lui-même commandé par les deux leviers (4, 5). Cette variante permet ainsi les ouvertures d'urgence en actionnant un seul levier sur un débattement plus grand. La coquille (2) est montée sur un élément de garniture (8) à l'aide d'un élément de décoration (3) qui vient se clipser sur les extrémités de la coquille (2) en certains points prévus sur celle-ci et qui comportent des dents élastiques (21) déformables sur lesquelles viennent se clipser des fourches (30) appartenant à l'élément de décoration (3). De cette façon la garniture (8), sur laquelle le dispositif doit être monté, est pincée entre la coquille et l'élément de décoration.

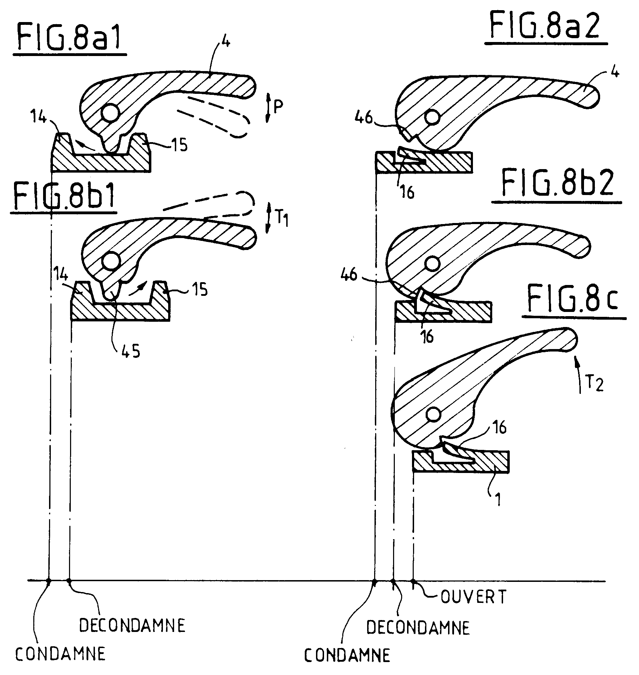

Une troisième variante de réalisation du dispositif est représentée pour le levier à la figure 7A et pour le patin à la figure 7B. Sur cette variante, on peut voir que le dispositif fonctionne avec un seul levier comportant dans deux plans décalés axialement un pignon (45) et un crochet (46), le crochet (46) étant également décalé angulairement par rapport au pignon (45). Le pignon (45) du levier (4) coopère avec les deux ergots (14, 15) du patin (1) alors que le crochet (46) coopère avec la languette élastique (16), prévue sur une piste du patin parallèle aux ergots (14, 15) et approximativement dans la zone centrale entre ces deux ergots. Le patin (1) comporte également une portion perpendiculaire à la face supportant les ergots et la languette, cette portion étant pourvue d'une zone (17) comportant des zones de marquage de couleurs différentes, permettant de visualiser la position du patin correspondant à l'état de la serrure du véhicule.

Le fonctionnement du dispositif des figures 7 est expliqué aux figures 8. Ainsi, lorsque le patin (1) est dans la position dite "condamnée", représentée à la figure 8a1, une action de traction sur le levier (4) permet de faire passer le patin de la position "condamnée" à la position "décondamnée" représentée à la figure 8b1. Lorsque le patin est dans la position "condamnée", on constate sur la figure 8a2 que la languette élastique (16) ne peut pas être en prise avec le crochet d'engrènement (46) du levier (4) tandis qu'après la traction (T1) sur le levier (4) le patin étant passé dans la position "décondamnée", on constate sur la figure 8b2 que la languette (16) est venue se placer dans le logement formé par le crochet (46). Ceci permet donc, lors d'une seconde traction (T2) sur le levier (4), représentée à la figure 8c, de faire passer le patin de la position "décondamnée" à la position "ouvert", position dans laquelle le câble aura exercé un déplacement suffisant pour ouvrir la serrure de la portière. De cette façon, dans, par exemple, une application de ce dispositif par deux tractions successives sur le levier, on passe de la position "condamnée" à la position "ouverture de porte". Une traction intempestive sur le levier ne peut pas permettre d'ouvrir la porte, par exemple d'un véhicule, une fois que les portes ont été mises en position "condamnée". Pour passer à la position "condamnée" à partir de la position "décondamnée" après une ouverture de porte, il suffira, comme représenté à la figure 8a1, d'exercer une pression (P) sur le levier (4) de façon à le faire basculer dans le sens des aiguilles d'une montre, déplaçant ainsi le patin (1) vers la position "condamnée" en faisant appuyer le pignon (45) sur le téton (14) du patin.

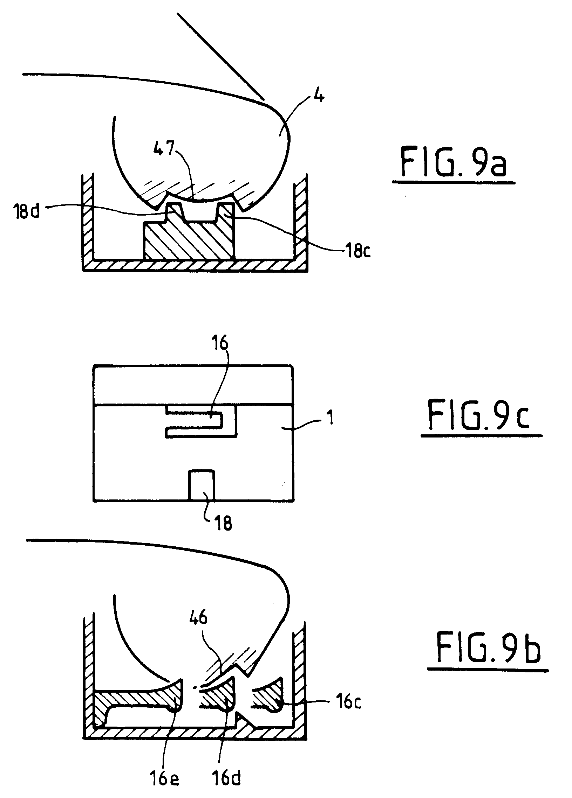

Les figures 9A et 9B représentent une quatrième variante de réalisation du dispositif dans laquelle le levier comporte une encoche de débattement angulaire plus important (47) permettant de déplacer un doigt (18) solidaire du patin (1), visible sur la figure 9C, d'une première position de condamnation représentée par la référence (18c) de la figure 9A vers une deuxième position dite "décondamnée" représentée par la référence (18d). Ce déplacement s'effectue par une traction permettant au levier (4) de pivoter d'un angle de 40 à 45°. Le patin en addition à la dent (18) d'engrènement avec l'élément échancré (47) du levier (4) comporte une languette élastique (16), comme précédemment, située légèrement en avant de la dent (18) de façon à ce que cette languette (16) se trouve dans la position (16c) représentée à la figure 9B lorsque la dent (18) est dans la position "condamnée". Cette languette (16) se retrouve en position (16d) "décondamnée" lorsque la languette (18) est dans la position (18d) de la figure 9A et dans cette position, la languette engrène avec l'encoche (46) du levier pour permettre, par rotation du levier, de déplacer la languette (16) de la position (16d) à la position (16o) correspondant à la position d'ouverture de la serrure.

D'autres variantes à la portée de l'homme de métier font également partie de l'esprit de l'invention.

## Revendications

1. Dispositif de commande des déplacements d'un câble (7) dans sa gaine à l'aide d'au moins un levier permettant le déplacement du câble entre trois positions différentes, avancée, intermédiaire, reculée, correspondant à trois fonctions à commander est caractérisé en ce que l'extrémité (70) du câble est rendue solidaire d'un patin (1) coulissant dans une gorge à proximité d'au moins un levier, ledit patin étant pourvu d'au moins deux dents sur une face tournée vers le levier, et permettant, soit par une double traction sur le levier unique de déplacer successivement le patin entre les trois positions, soit par une traction successive sur chacun des deux leviers, le déplacement du patin entre les trois position.

2. Dispositif de commande des déplacements d'un câble (7) dans sa gaine à l'aide de deux leviers selon la revendication 1, caractérisé en ce que l'extrémité (70) du câble est rendue solidaire d'un patin (1) coulissant dans une gorge à proximité des deux leviers (4, 5), ledit patin étant pourvu d'au moins deux dents (11, 12) sur une face tournée vers les leviers(4, 5), le premier levier (5) comportant une fourche (51) engrénant avec une première dent (12) pour déplacer le patin (1) de la position la plus avancée où le deuxième levier (4) n'engrène pas avec la deuxième dent (11), à la position intermédiaire où une fourche (41) du deuxième levier (4) engrène avec la deuxième dent (11), pour assurer par actionnement du deuxième levier (4) le déplacement du patin (1) de la position intermédiaire à la position reculée.

3. Dispositif selon la revendication 2, caractérisé en ce que la gorge est linéaire.

4. Dispositif selon la revendication 2 ou 3, caractérisé en ce que le premier levier (5) comporte un épaulement (523) venant en butée sur la première dent (12) du patin (1) lorsque celui-ci est dans la position reculée.

5. Dispositif selon une des revendications 1 à 4, caractérisé en ce que le deuxième levier (4) comporte un épaulement (421) assurant le retour du patin (1) de la position reculée à la position intermédiaire lorsque le deuxième levier (4) bascule de sa position d'ouverture à la position de repos.

6. Dispositif selon la revendication 1, caractérisé en ce que le patin (1) comporte en vis-à-vis du levier (4) deux dents (11, 13) dont l'une (13), de taille supérieure, permet, par coopération avec le levier (4) sollicité en permanence vers une position de repos par un ressort, de déplacer le patin (1) de la position avancée à la position reculée.

7. Dispositif selon la revendication 6, caractérisé en ce que la dent (13) de taille supérieure est disposée et conformée sur le patin (1) de façon que le patin (1) étant dans la position avancée, une dent (40) du levier (4) appuie sur la dent (13) de taille supérieure et reste à son contact pendant tout le déplacement de la position avancée à la position reculée.

8. Dispositif selon la revendication 7, caractérisé en ce que la dent (40) forme une fourche (41) de profondeur et de largeur suffisantes pour enjamber les deux dents (11, 113).

9. Dispositif de commande des déplacements d'un câble (7) dans sa gaine à l'aide d'un levier selon la revendication 1, caractérisé en ce que l'extrémité (70) du câble est rendue solidaire d'un patin (1) coulissant dans une gorge à proximité d'un levier (4), le levier sollicité en permanence vers une position de repos par un ressort comportant deux éléments d'engrènement (45, 46, 47) décalés axialement par rapport à l'axe de pivotement du levier et angulairement de façon à engrener chacun avec un élément complémentaire (14, 15, 16, 18) disposé chacun sur le patin (1) selon deux pistes parallèles à l'axe du câble, les premiers éléments (45, 14, 15 ; 47, 18) d'engrènement assurant par une traction sur le levier (4) le déplacement du patin (1) d'une première position dite condamnée vers une deuxième position dite décondamnée dans laquelle les deuxièmes éléments d'engrènement (46, 16) du levier et du patin coopèrent, les deuxièmes éléments assurant par une deuxième traction le déplacement du patin de la deuxième position vers une troisième position dite d'ouverture.

10. Dispositif selon la revendication 9, caractérisé en ce que lorsque le levier est relâché, le ressort de rappel du levier (4), en ramenant celui-ci à la position de repos, assure également le déplacement du patin de la troisième position à la deuxième.

11. Dispositif selon la revendication 9 ou 10, caractérisé en ce qu'une pression exercée sur le levier lorsque le patin est dans la deuxième position, assure par le premier élément d'engrènement, le retour du patin à la première position.

12. Dispositif selon une des revendications 9 à 11, caractérisé en ce que le premier élément d'engrènement est constitué d'un pignon (45) sur le levier (4) et de deux dents (14, 15) disposées à chaque extrémité du patin (1).

13. Dispositif selon une des revendications 11 ou 12, caractérisé en ce que le premier élément est constitué d'une dent (18) située approximativement au centre du patin (1) et coopérant avec une encoche (47) angulaire du levier (4) correspondant à l'angle nécessaire au déplacement du patin (1).

14. Dispositif selon une des revendications 12 ou 13, caractérisé en ce que le deuxième élément est constitué d'une languette élastique saillante (16) formée dans le patin (1) et d'une encoche (44) formée dans la surface du levier pour qu'elle se trouve en vis-à-vis de la languette lorsque le patin est dans la deuxième position.

15. Dispositif selon une des revendications précédentes, caractérisé en ce que les leviers (4, 5) sont montés pivotant dans une coquille (2) comportant en son fond une gorge de guidage du patin.

16. Dispositif selon la revendication 8, caractérisé en ce que la coquille (2) comporte des moyens de clipsage avec un élément décoratif (3) permettant le pincement, de la surface (8) sur laquelle est monté le dispositif, entre la coquille (2) et l'élément décoratif (3).
